Europäisches Patentamt

European Patent Office

Office européen des brevets

(19)

(11) Veröffentlichungsnummer: **0 351 440 B1**

# EUROPÄISCHE PATENTSCHRIFT

(12)

(45) Veröffentlichungstag der Patentschrift: **23.12.92**

(21) Anmeldenummer: **88111640.4**

(22) Anmeldetag: **20.07.88**

(51) Int. Cl.⁵: **C04B 20/10**, B28C 5/42, B28C 5/46

(54) **Verfahren zum Einbetten von zu deponierendem asbesthaltigem Bauschutt in Betonkörper sowie Vorrichtung zur Durchführung des Verfahrens.**

(43) Veröffentlichungstag der Anmeldung:
**24.01.90 Patentblatt 90/04**

(45) Bekanntmachung des Hinweises auf die Patenterteilung:
**23.12.92 Patentblatt 92/52**

(84) Benannte Vertragsstaaten:
**AT BE CH DE FR GB IT LI LU NL SE**

(56) Entgegenhaltungen:
CH-A- 425 593        CH-A- 658 996
DE-A- 1 148 984      DE-A- 2 429 858
DE-A- 3 704 014      DE-C- 658 876
FR-A- 1 343 294      FR-A- 1 398 015
FR-A- 1 489 131      GB-A- 405 305
GB-A- 587 698        GB-A- 1 182 590
GB-A- 1 478 830      GB-A- 2 204 308
US-A- 3 832 280      US-A- 4 416 603
US-A- 4 669 887

(73) Patentinhaber: **KLUGE UMWELTSCHUTZ GmbH
Hülsermannhof 36
W-4100 Duisburg 18(DE)**

(72) Erfinder: **Jürgens, Karl-Heinz,
Veltrup 22 c
W-4407 Emsdetten(DE)**
Erfinder: **Kluge, Wilhelm
Franzstrasse 18
W-4100 Duisburg 11(DE)**
Erfinder: **Lowicki, Stephan
Walramsweg 24
W-4100 Duisburg 1(DE)**

(74) Vertreter: **Schulze Horn, Stefan, Dipl.-Ing.
M.Sc.
Goldstrasse 36
W-4400 Münster(DE)**

EP 0 351 440 B1

## Beschreibung

Die Erfindung betrifft ein Verfahren zum Einbetten von zu deponierendem asbesthaltigen Bauschutt in Betonkörper, gemäß dem Oberbegriff des Patentanspruchs 1. Weiterhin betrifft die Erfindung eine Vorrichtung zur Durchführung des Verfahrens.

Asbeststaub ist ein für Menschen stark gesundheitsgefährdender Stoff, dessen Anwesenheit in der Atemluft möglichst vermieden werden muß. Ein besonderes Problem ist hierbei, daß das hohe Gefährdungspotential von Asbeststaub erst vor relativ kurzer Zeit voll erkannt wurde. Deshalb wurde bis vor kurzem Asbest noch für eine Vielzahl von Verwendungszwecken eingesetzt, z.B. in Asbest-Zement-Dachplatten, Fassadenelementen, Feuerschutzwanden, Flurunterdecken, Bodenplatten, Rohrleitungen, Feuerschutztextilien und vor allem in Isoliermitteln in Form von Spritzasbest, wobei der letztgenannte Verwendungszweck heute die größten Probleme bereitet. Asbestteilchen gelangen durch mechanische Bearbeitung und Verschleiß, aber auch allein durch Verwitterung und Alterung der asbesthaltigen Bauteile in die Umwelt. Deshalb müssen heute viele Gebäude, insbesondere Schwimmhallen, Schulen und Kindergärten, die bei ihrem Bau mit dem seinerzeit als hervorragend eingestufen Baustoff Asbest ausgerüstet wurden, unter strengen behördlichen Auflagen und nach den technischen Regeln für Gefahrstoffe (TRGS 517) von asbesthaltigen Baustoffen befreit werden. Hierzu werden ganze Gebäude oder einzelne Räume mit dichten Abdeckungen versehen, die unter Unterdruck gesetzt werden, damit während der Abbruch- oder Ausbauarbeiten keine Asbestpartikel in die Außenluft gelangen. Die asbesthaltigen Baumaterialien werden mit üblichen Abbruchwerkzeugen, falls möglich hinter einem Wasserschleier, abgebrochen. Der asbesthaltige Bauschutt wird mit Wasser, das mit Netzmitteln versetzt sein kann, zu einem Schuttschlamm vermengt, in Behälter gefördert und mit Spezialfahrzeugen abgefahren. Dieser Schuttschlamm durfte bisher auf Deponien verkippt werden. Um jedoch nicht auf diese Weise für die Zukunft neue Altlasten zu schaffen, wurde vorgeschlagen, den asbesthaltigen Schuttschlamm durch Zugabe von Zement zu Betonkörpern zu verarbeiten und diese nach Aushärtung auf Deponien abzulagern. Hierbei tritt jedoch das Problem auf, daß dieses Verfahren noch keine sichere Beseitigung des Asbests bietet, weil bei Bruch oder Verwitterung des Betonkörpers die Asbestteilchen weitestgehend wieder freigelegt werden und dann erneut in die Umwelt gelangen. Dies beruht insbesondere darauf, daß die Korngröße der Zementstaubpartikel im Mittel deutlich größer ist als die Dimensionen der faserigen Asbestpartikel, was eine ausreichend sichere Langzeit-Einbindung und damit Schadlosmachung der Asbestteilchen ausschließt.

Zu dieser Problematik schlägt die CH-A-658 996 ein Verfahren für die Sanierung der Umgebung bei der Entfernung von Spritzasbest vor, bei dem man im Bereich der Entfernungsstelle des Spritzasbests die Luft mit einem erhärtenden Bindemittelspray behandelt, die Asbestfasern bindet und die Lungengängigkeit inhibiert. Die Behandlung der Luft erfolgt dabei z.B. mittels eines Zerstäubungsgerätes, mittels welchem Bindemittel durch eine Düse versprüht wird. Das Bindemittelspray ist dabei ein Silikatbinder, wie Wasser-, Kali-, Natron-, Doppelwasser-, Lithiumwasserglas oder dergleichen. Durch das zersprühte Spray werden die Asbestfasern ummantelt. Die ausgehärteten Tröpfchen des Bindemittelsprays, welche die Asbestfasern enthalten, lassen sich dann als unschädliche Teile absetzen und aufiltrieren.

Mit diesem bekannten Verfahren läßt sich zwar eine Bindung von in der Luft schwebenden Asbestpartikeln und -fasern für eine vereinfachte Filtrierung erreichen, jedoch wird bei einer späteren Einbettung der ummantelten Fasern in einen Betonkörper noch keine optimale Bindung erreicht, so daß es mit der Zeit wieder zu einem Freisetzen von Asbestfasern bei mechanischer Beanspruchung oder Verwitterung des Betonkörpers kommen kann.

Aus der GB-A-2 204 308 ist ein Verfahren zur Beseitigung von gefährlichen asbesthaltigen Materialien bekannt, wobei hier in einem ersten Schritt die Materialien befeuchtet und ummantelt werden Hierzu wird eine Mischung aus Wasser, Propylenglycol und Vinylacetat/Ethylen-Copolymer in bestimmten Mengenverhältnissen verwendet. Das damit befeuchtete Material soll dann von der Entnahmestelle, z.B. einem zu sanierenden Gebäude, zu einer entfernt liegenden Weiterverarbeitungseinrichtung transportiert werden, wo es dann mit einer Mischung aus Wasser, Portlandzement und nochmals Vinylacetat/Ethylen-Copolymer und Propylenglycol zu einem Beton angemischt und zu festen, deponierbaren Betonkörpern geformt wird. Auch eine Zugabe von Natriumsilikat-Lösung wird vorgeschlagen, allerdings hier lediglich als flammhemmender Zusatz. Als nachteilig wird bei diesem Verfahren angesehen, daß es relativ teuere Zuschlagstoffe erfordert und daß eng begrenzte Mischungsverhältnisse eingehalten werden müssen, was einen hohen technischen Aufwand zur Erzielung der erforderlichen Mengengenauigkeiten erfordert. Eine Sicherheit der Asbesteinbettung für sehr lange Zeiträume kann dadurch nicht immer gewährleistet werden, da es nach praktischen Erfahrungen häufig zu Ungenauigkeiten bei der Arbeit vor Ort kommt.

Es stellt sich daher die Aufgabe, ein Verfahren der eingangs genannten Art zu schaffen, das eine sichere und dauerhafte Einbindung von Asbestpartikeln aus asbesthaltigem Bauschutt in deponierbaren Betonkörpern gewährleistet, auch wenn letztere mechanischen Einwirkungen und/oder Verwitterungseinflüssen ausgesetzt sind. Außerdem soll eine Vorrichtung zur Durchführung des Verfahrens angegeben werden.

Die Lösung des ersten Teils dieser Aufgabe gelingt erfindungsgemäß durch ein Verfahren der im Oberbegriff des Patentanspruchs 1 genannten Art mit dessen kennzeichnenden Merkmalen.

Mit dem neuen Verfahren wird erreicht, daß die Asbestpartikel im Schutt, bevor sie mit einer Natriumsilikat-Hülle umgeben werden, mit einer zusätzlichen Salzlösungs-Umhüllung versehen werden, die die Asbestpartikel fest anhaftend und vollständig umgibt. Bei der folgenden Aushärtung zu dem Betonkörper wird auf diese Weise die erwünschte Brückenbildung zwischen den umhüllten Asbestpartikeln und den Zementkörnern so weit intensiviert, daß eine sichere Bindung des Asbests auch bei Betonkörpern gewährleistet wird, die stärkeren äußeren Einflüssen unterliegen. Zudem sind die verwendeten Lösungen preiswert sowie leicht handhabbar und verarbeitbar und im Hinblick auf den Umweltschutz unbedenklich.

Zwar ist es aus der US-A-3 832 280 bekannt, Asbestfasern mit Aluminiumsulfat-Lösung zu besprühen, jedoch dient dies hier zur Verbesserung der Filtriereingenschaften des Asbestfasergeflechts eines Bauelementes aus Asbestzement bei dessen Herstellung, d.h. es soll eine Beschleunigung des Wasserentzuges eines wassergelegten Asbestzementproduktes nach dessen Formung erreicht werden. Hinweise auf eine Verbesserung der Bindung zwischen Asbestfasern und Zementkörnern werden hier nicht gegeben.

Innerhalb des Ablaufes des erfindungsgemäßen Verfahrens kann zumindest ein Teil des Zementes der wässrigen Natriumsilikat-Lösung vor deren Zugabe zu dem asbesthaltigen Bauschutt beigemengt werden. Hierdurch werden insbesondere ein vereinfachter und beschleunigter Verfahrensablauf sowie eine Verminderung der Belastung durch Zementstaub erreicht. Auch kann der Zement vor seiner Zugabe zu dem Schuttschlamm oder zu der wässrigen Natriumsilikat-Lösung mit Wasser zu einem Zementschlamm vermengt werden. Auch diese Maßnahme sorgt für eine Verringerung der Staubbildung und erleichtert die Durchführung des Verfahrens, da alle in diesem verwendeten und verarbeiteten Stoffe dann als fließ- oder pumpfähige Flüssigkeiten oder Schlämme vorliegen.

Die Lösung des zweiten Teils der Aufgabe, betreffend eine Vorrichtung zur Durchführung des Verfahrens, gelingt mit einer Vorrichtung gemäß dem Patentanspruch 2. Mit dieser Vorrichtung kann auf sichere Art und Weise aus aufgenommenem asbesthaltigen Bauschutt sowie Zuschlagstoffen und Wasser ein Frischbeton erzeugt und zur Aushärtung in Gießformen gefüllt werden. Mit der Zuförderstrecke werden eine umweltschonende Zuführung des asbesthaltigen Schutts zum Behälter sowie eine vollflächige und frühzeitige Benetzung der Schutteilchen und eine gute Staubbindung erreicht.

Weiterhin kann in die Zuförderstrecke eine mechanische Zerkleinerungsvorrichtung eingeschaltet sein, die den anfallendenen Bauschutt ausreichend zerkleinert, um den hiermit erzeugten Schuttschlamm möglichst homogen und gut fließfähig sowie förderfähig zu machen.

Im folgenden soll schließlich noch eine typische Zusammensetzung des im Verfahren erzeugten Gemisches angegeben werden:
1 kg asbesthaltiger Schutt wird mit 150 - 200ml Wasser vermischt. Dieser zugegebenen Wassermenge werden zuvor noch 10 - 20g Magnesiumsulfat oder Aluminiumsulfat zur Bildung einer entsprechenden Salzlösung zugegeben. Diesem Schuttschlamm werden 40g 70%ige wässrige Natriumsilikat-Lösung zugegeben. Anschließend werden 240 - 280g Zement zugegeben und mit den übrigen Bestandteilen vermengt. Dieses Gemisch wird anschließend in Gießformen gefüllt und härtet dort zu festen Betonkörpern aus.

## Patentansprüche

1. Verfahren zum Einbetten von zu deponierendem asbesthaltigen Bauschutt in Betonkörper, wobei der asbesthaltige Bauschutt, erforderlichenfalls mechanisch zerkleinert, mit Wasser zu einem pumpfähigen Schuttschlamm vermengt wird, dem Schuttschlamm eine zur Erzeugung eines aushärtenden Frischbetons ausreichende Menge Zement zugegeben wird, das den Frischbeton bildende Schuttschlamm-Zement-Gemisch in Formen zur Aushärtung zu Betonkörpern gegossen wird und die Oberfläche der den asbesthaltigen Bauschutt bildenden Schutteilchen vor dem Vermengen mit dem Wasser und dem Zement durch Zugabe von wässriger Natriumsilikat-Lösung benetzt wird,
dadurch gekennzeichnet, daß die Schutteilchen des asbesthaltigen Bauschutts vor der Zugabe der wässrigen Natriumsilikat-Lösung mit einer verdünnten Salzlösung aus Magnesium- oder Aluminiumsulfat benetzt werden.

2. Vorrichtung zur Durchführung des Verfahrens nach Anspruch 1, im wesentlichen bestehend aus einem geschlossenen Behälter mit wenigstens einer absperrbaren Zuführleitung und mit wenigstens einer absperrbaren Abführleitung, mit mindestens einer Vakuumpumpe als Fördereinrichtung, die saugseitig oberhalb des maximalen Füllstandes mit dem Inneren des Behälters verbunden ist, und mit einer Mengvorrichtung zum Vermengen des Behälterinhalts,

dadurch gekennzeichnet, daß dem Behälter eine im wesentlichen staubdicht gekapselte Zuförderstrecke vorgeschaltet ist und daß an der Zuförderstrecke eine Sprüh- oder Sprinkler-Vorrichtung zur Benetzung von dem Behälter zugeförderten, den asbesthaltigen Bauschutt bildenden Schutteilchen mit Natriumsilikat-Lösung und Magnesiumsulfat- oder Aluminiumsulfat-Salzlösung angeordnet ist.

3. Vorrichtung nach Anspruch 2, dadurch gekennzeichnet, daß in die Zuförderstrecke eine mechanische Zerkleinerungsvorrichtung eingeschaltet ist.

## Claims

1. Process to incorporate disposable asbestos-containing rubble in concrete bodies, whereby the asbestos-containing rubble is, if necessary, crushed mechanically, mined with wasser to form a pumpable waste sludge, to which sludge a sufficient quantity of cement is added to form a green cement capable of hardening and the waste sludge and cement mixture which forms the green concrete is poured into casting moulds, in which it hardens to concrete bodies and the surface of the rubble particles forming the asbestos-containing rubble are wetted by the addition of a watery solution of sodium silicate before being mixed with the water and the cement,
characterized in that
the rubble particles of the asbestos-containing rubble are wetted with a diluted solution of magnesium or aluminium sulphate before the addition of the watery sodium silicate solution is added.

2. Apparatus for carrying out the process according to claim 1, comprizing essentially a closed container with at least one feeder pipe which can be shut off and with at least one outlet pipe which is also capable of being shut off, with at least one vacuum pump serving as a conveyance device that is attached, on the suction side above the maximal filling level, to the inside of the container and with a mixing device to mix the contents of the container,
characterized in that
a largely dust-proof encased conveyer belt is superposed on the container and that a spraying or sprinkler device to wet the particles forming the asbestos-containing rubble with sodium silicate solution and a magnesium or aluminium solution is attached to the conveyer belt.

3. Apparatus according to claim 2,
characterized in that
a mechanical crushing device is attached to the conveyer belt.

## Revendications

1. Procédé d'enrobage, dans des corps de béton, de gravois contenant de l'amiante à déposer en décharge, dans lequel le gravois, broyé mécaniquement si nécessaire, contenant l'amiante est mélangé avec de l'eau en une boue de gravois susceptible d'être pompée, une quantité suffisante de ciment est ajoutée à la boue de gravois pour former un béton fraîchement malaxé durcissant, le mélange boue de gravois-ciment qui forme le béton fraîchement malaxé est coulé dans des moules pour durcir en corps de béton et la surface des particules constituant le gravois contenant l'amiante est mouillé, par addition d'une solution aqueuse de silicate de sodium, avant d'être mélangé avec l'eau et le ciment,
caractérisé en ce que les particules du gravois contenant l'amiante sont mouillées, avant l'addition de la solution aqueuse de silicate de sodium, au moyen d'une solution saline diluée de sulfate de magnésium ou d'aluminium.

2. Dispositif de mise en oeuvre du procédé selon la revendication 1, se composant sensiblement d'un récipient fermé comportant au moins une conduite d'amenée qui peut être bouchée et une conduite d'évacuation qui peut être bouchée, pourvu d'une pompe à vide servant de dispositif de transport qui est reliée à l'intérieur du récipient côté aspiration au-dessus du niveau maximal, et pourvu d'un dispositif de mélange pour mélanger le contenu du récipient,
caractérisé en ce qu'un trajet d'amenée fermé de façon sensiblement étanche aux poussières est formé en amont du récipient et en ce qu'un dispositif de pulvérisation ou sprinkler est disposé dans le trajet d'amenée pour mouiller, à l'aide d'une solution de silicate de sodium et d'une solution saline de sulfate de magnésium ou de sulfate d'aluminium, des particules formant le gravois contenant l'amiante amenées au récipient.

3. Dispositif selon la revendication 2, caractérisé en ce qu'un dispositif de broyage mécanique est monté dans le trajet d'amenée.